# EUROPÄISCHE PATENTSCHRIFT

(11) **EP 1 279 276 B1**
(45) Veröffentlichungstag und Bekanntmachung des Hinweises auf die Patenterteilung: **25.08.2004**
(21) Anmeldenummer: 01936022.1
(22) Anmeldetag: 02.05.2001
(51) Int. Cl.: H04M 15/00, H04M 3/58, H04M 3/42

(54) **GEBÜHRENABHÄNGIGES ANTI-TROMBONING**
CHARGE-DEPENDENT ANTI-TROMBONING SYSTEM
SYSTEME "D'ANTI-TROMBONING" DEPENDANT DES HONORAIRES

(30) Priorität: 04.05.2000 DE 10021596
(43) Veröffentlichungstag der Anmeldung: 29.01.2003
(73) Patentinhaber: Siemens Aktiengesellschaft, 80333 München (DE)
(72) Erfinder: ROMANSKI, Irena, 82544 Egling (DE)
(86) Internationale Anmeldenummer: PCT/DE2001/001654
(87) Internationale Veröffentlichungsnummer: WO 2001/084818

(56) Entgegenhaltungen:
- US-A- 5 517 560

## Beschreibung

Die vorliegende Erfindung betrifft eine Vorrichtung zum Umwandeln einer über ein Fernsprechnetz vermittelten Dreierfernmeldeverbindung in eine Zweierfernmeldeverbindung gemäß dem Oberbegriff des beigefügten Anspruchs 1 und ein Verfahren zum Umwandeln einer über ein Fernsprechnetz vermittelten Dreierfernmeldeverbindung in eine Zweierfernmeldeverbindung gemäß dem Oberbegriff des beigefügten Anspruchs 7.

Die Umwandlung von Dreierfernmeldeverbindungen zwischen einem ersten, einem zweiten und einem dritten Teilnehmeranschluß in Zweierfernmeldeverbindungen zwischen einem ersten und einem dritten Teilnehmeranschluß wird immer dann angewendet, wenn Verbindungen in einem Fernsprechnetz weitervermittelt werden müssen. Als Beispiel hierfür könnte man sich ein "Bank-Szenario" vorstellen: Ein Bankkunde ruft von einem ersten Teilnehmeranschluß die Telefonzentrale seiner Bank (zweiter Teilnehmeranschluß) an. Die Vermittlungskraft in der Telefonzentrale der Bank stellt fest, daß für diesen Kunden ein bestimmter Sachbearbeiter (dritter Teilnehmeranschluß) zuständig ist, und stellt eine Verbindung zu diesem Sachbearbeiter her. Somit ist eine Dreierfernmeldeverbindung, im Beispiel zwischen dem Kunden und der Vermittlungskraft und zwischen der Vermittlungskraft und dem Sachbearbeiter, hergestellt. Die Vermittlungskraft stellt nun eine Verbindung (Zweierfernmeldeverbindung) zwischen dem Kunden und dem Sachbearbeiter her, indem er seine eigene Verbindung auslöst.

In diesem Beispiel wird davon ausgegangen, daß der Bankkunde (erster Teilnehmeranschluß) und die Telefonzentrale (zweiter Teilnehmeranschluß) an unterschiedlichen Vermittlungsstellen angeschlossen sind. Beim Stand der Technik ist somit der Verbindungsweg von der Vermittlungsstelle des ersten Teilnehmeranschlusses über die Vermittlungsstelle des zweiten Teilnehmeranschlusses zur Vermittlungsstelle des dritten Teilnehmeranschlusses geschaltet. Das ist z. B. der Fall, wenn der Bankkunde in München, die Telefonzentrale in Köln und der Sachbearbeiter wiederum in München sind, obwohl sich Kunde und Sachbearbeiter in einer Stadt befinden.

US Patentanmeldung US-A-5 517 560 offenbart ein Verfahren zur Vergebührung und Messung von weitergeleiteten Anrufen.

Die Aufgabe der vorliegenden Erfindung ist , eine Vorrichtung zum Umwandeln einer über ein Fernsprechnetz vermittelten Dreierfernmeldeverbindung in eine Zweierfernmeldeverbindung gemäß dem Oberbegriff des beigefügten Anspruches 1 und ein in dieser Vorrichtung angewendetes Verfahren zum Umwandeln einer Dreierfernmeldeverbindung in eine Zweierfernmeldeverbindung bereitzustellen, bei denen eine möglichst kostengünstige Zweierfernmeldeverbindung hergestellt wird.

Diese Aufgabe wird durch eine Vorrichtung zum Umwandeln einer Dreierfernmeldeverbindung in eine Zweierfernmeldeverbindung gemäß dem beigefügten Anspruch 1 und ein Verfahren zum Umwandeln einer Dreierfernmeldeverbindung in eine Zweierfernmeldeverbindung gemäß dem beigefügten Anspruch 7 gelöst.

Gemäß der vorliegenden Erfindung wird dabei derjenige Verbindungsweg durchgeschaltet, der weniger Kosten für die Verbindung verursacht. Dazu werden erfindungsgemäß beim Einleiten der Weiterleitung bzw. der Umwandlung die anfallenden Gebühren für beide Verbindungsvarianten ermittelt.

Die direkte Durchschaltung (sogenanntes Anti-Tromboning) erfolgt gemäß der vorliegenden Erfindung immer nur in dem Fall, daß es sich hierbei um die aktuell kostengünstigste Verbindung handelt. Dieses Verfahren ist somit wesentlich flexibler als eine administrative Lösung, bei der nur ein fixes Verfahren eingestellt werden kann (zum Beispiel nur die direkte Verbindung).

Vorteilhafte Ausgestaltungen der vorliegenden Erfindung sind in den Unteransprüchen 2 bis 6 und 8 bis 12 wiedergegeben.

Die Durchschaltung der jeweiligen Verbindungsvariante wird dabei durch die erfindungsgemäße Vorrichtung angeregt, indem sie über einen Signalisierungskanal Signalisierungsinformationen an die betroffenen Vermittlungsstellen versendet. Die entsprechende Signalisierung erfolgt dabei im Zeichengabesystem Nr. 7 beispielsweise im QSIG-ASE-Container (Application Service Entity, standardisiertes Vernetzungsprotokoll) im ISUP (ISDN User Part) oder im TCAP (Transaction Capabilities Application Part).

Die beiden miteinander zu verbindenden Teilnehmeranschlüsse (erster und dritter Teilnehmeranschluß) können an einer gemeinsamen Vermittlungsstelle angeschlossen sein, wenn sich (nach oben genanntem Beispiel) zum Beispiel Kunde und Sachbearbeiter in der gleichen Stadt befinden.

Damit die Gebühren für beide Verbindungsvarianten durch die erfindungsgemäße Ermittlungseinrichtung zum Ermitteln von Verbindungsgebühren ermittelt werden können, werden die hierzu relevanten Daten durch diese Ermittlungseinrichtung vor der Durchschaltung jeweils aktuell eingelesen.

Diese Daten können dabei als Tariftabellen, die die Kosten für eine Verbindung angeben, oder als Zonendaten, die die Entfernung für eine Verbindung angeben, vorliegen. Bei der Ermittlung von Zonendaten müssen zusätzlich Tarifdaten durch die Ermittlungseinrichtung in die erfindungsgemäße Vorrichtung eingelesen werden, aus denen unter Verknüpfung mit den Zonendaten die Gebühren für die jeweiligen Verbindungsvarianten berechnet werden.

Die Tariftabellen bzw. Zonendaten werden dabei aus den jeweiligen Vermittlungsstellen, die an der aktuellen Dreierfernmeldeverbindung beteiligt sind, durch die Ermittlungseinrichtung ausgelesen. Die für die Zonendaten benötigten Tarifdaten können dabei, falls nicht von der Vermittlungsstelle geliefert, aus einem Server oder Internetzugang ausgelesen werden.

Die vorliegende Erfindung wird nachfolgend anhand von bevorzugten Ausführungsbeispielen unter Bezug auf die beigefügten Zeichnungen näher erläutert, in denen zeigen
- Figur 1: die schematische Darstellung der erfindungsgemäßen Vorrichtung in einem Fernsprechnetz und
- Figuren 2 bis 7: Beispiele für die Funktionsweise der erfindungsgemäßen Vorrichtung zum Umwandeln einer über ein Fernsprechnetz vermittelten Dreierfernmeldeverbindung in eine Zweierfernmeldeverbindung.

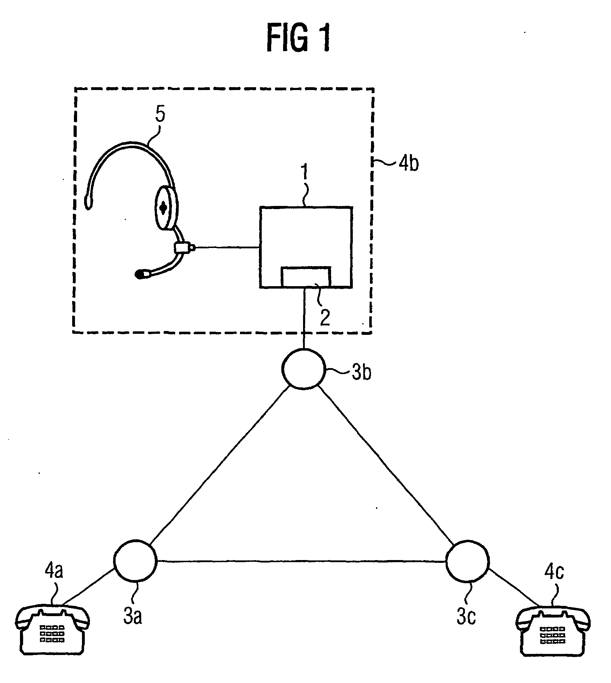

Wie in Figur 1 zu sehen ist, besteht ein Fernsprechnetz aus Teilnehmeranschlüssen 4a ... 4c mit Endgeräten (Telefone, PCs, ...), die an Vermittlungsstellen 3a ... 3c angeschlossen sind. Die Vermittlungsstellen 3a ... 3c sind untereinander vernetzt; zwischen den Vermittlungsstellen 3a ... 3c können sich weitere Vermittlungsstellen befinden.

Die Durchschaltung der Verbindung zwischen dem ersten Teilnehmeranschluß 4a und dem dritten Teilnehmeranschluß 4c wird vom zweiten Teilnehmeranschluß 4b angeregt. Der zweite Teilnehmeranschluß 4b ist beispielsweise ein Vermittlungsplatz mit einem PC, wobei der PC die erfindungsgemäße Vorrichtung 1 zum Umwandeln einer Dreierfernmeldeverbindung in eine Zweierfernmeldeverbindung mit der Ermittlungseinrichtung 2 zum Ermitteln von Verbindungsgebühren aufweist. Im weiteren ist an diesen PC beispielsweise ein Headset 5 zur Kommunikation der Vermittlungskraft mit den anderen Teilnehmern angeschlossen.

Zum Umwandeln der Dreierfernmeldeverbindung in eine Zweierfernmeldeverbindung stehen zwei Verbindungswege zur Verfügung: Zum einen der Weg von der Vermittlungsstelle 3a des Teilnehmeranschlusses 4a über die Vermittlungsstelle 3b des Teilnehmeranschlusses 4b zur Vermittlungsstelle 3c des Teilnehmeranschlusses 4c. Die Durchschaltung der Verbindung über diesen Verbindungsweg wird "Tromboning" genannt.

Weiterhin steht zur Verbindung zwischen der Vermittlungsstelle 3a des ersten Teilnehmeranschlusses 4a und der Vermittlungsstelle 3c des dritten Teilnehmeranschlusses 4c der direkte Verbindungsweg zur Verfügung. Eine Durchschaltung über diesen Verbindungsweg wird "Anti-Tromboning" genannt.

Die Auswahl des Verbindungsweges erfolgt dabei durch die in der erfindungsgemäßen Vorrichtung 1 implementierte Ermittlungseinrichtung 2 zum Ermitteln von Verbindungsgebühren wie nachfolgend beschrieben:

Beim Einleiten der Durchschaltung (Call Transfer) werden von der erfindungsgemäßen Vorrichtung 1 die für die Ermittlung der Gebühren für beide Verbindungsvarianten relevanten Daten (zum Beispiel Tariftabellen, Zonen-/Tarifdaten) aus der Vermittlungsstelle 3a des ersten Teilnehmers 4a durch die Ermittlungseinrichtung 2 in die erfindungsgemäße Vorrichtung 1 ausgelesen. Diese Daten sind für die direkte Verbindung und für die Verbindung zwischen den Vermittlungsstellen 3a, 3b des ersten 4a und des zweiten 4b Teilnehmeranschlusses erforderlich; die Daten für die Verbindung zwischen den Vermittlungsstellen 3b, 3c des zweiten 4b und des dritten 4c Teilnehmeranschlusses liegen in der Vermittlungsstelle 3b des zweiten Teilnehmeranschlusses 4b vor.

Die Daten werden als Signalisiermeldungen wie bei einem Signalisierkanal übertragen, zum Beispiel über die standardisierten QSIG-ASE-Container im ISUP (ISDN User Part) oder im TCAP (Transaction Capabilities Application Part) des Zeichengabesystems Nr. 7, wobei die einzelnen Informationen (zum Beispiel Zonendaten) auch herstellerspezifisch sein können.

Die Vermittlungskraft (zweiter Teilnehmeranschluß 4b) verfügt über einen PC (zum Beispiel das Siemens-Produkt MAC, Multi Functional Attendant Console), der Zugriff auf die Zonen/Tarifdaten bzw. Tariftabellen des Fernsprechnetzes hat. Dieser Zugriff erfolgt z.B. mittels eines ISDN-Anschlusses über den ISDN-D-Kanal (im Falle eine Siemens-MAC) oder über den ISDN-B-Kanal.

Die zur Ermittlung der Verbindungsgebühren relevanten Daten können aus den entsprechenden Vermittlungsstellen und/oder über einen Server- bzw. Internetzugang ausgelesen werden. Spezielle Zugriffrechte können den Zugriff auf bestimmte Vermittlungskräfte einschränken, um einen Mißbrauch der Daten abzusichern. Aus den ausgelesenen bzw. in den PC eingelesenen Daten werden dann die Gesprächskosten für beide Varianten der Verbindungswege ermittelt bzw. berechnet.

Dadurch, daß die zur Ermittlung der gebührenrelevanten Daten jeweils vor bzw. während der Durchschaltung in die erfindungsgemäße Vorrichtung 1 eingelesen werden, sind diese Daten immer aktuell.

Es wäre auch denkbar, diese Daten direkt auf dem PC des Vermittlungsplatzes (zweiter Teilnehmeranschluß 4b) abzulegen; bei einer Änderung der (Tarif-)Daten erfolgt dann, im Falle eines Siemens-MAC, jeweils ein automatisches Laden der geänderten Tariftabellen, Zonendaten, usw. Müssen mehrere Vermittlungsplätze aus unterschiedlichen Vermittlungsstellen auf diese Daten zugreifen, so könnte dies zum Beispiel über eine sogenannte "Remote-Home-Agent-Lösung" im Rahmen der Client-Server-Technik erfolgen.

Mit Hilfe der Tariftabelle bzw. der Zonen- und Tarifdaten vergleicht die Ermittlungseinrichtung 2 zum Ermitteln von Verbindungsgebühren die Gebühren, die bei der jeweiligen Variante des Verbindungsweges entstehen würden, miteinander, und gibt die Information weiter, welcher Verbindungsweg die aktuell günstigeren Gebühren verursacht. Die Weitergabe der Informationen erfolgt in Signalisiermeldungen durch Weitergabe der Rufnummern des Verbindungsweges der ermittelten Durchschaltungsvariante. Entsprechen die weitergegebenen Rufnummern dem aktuellen Verbindungsweg, so wird eine Durchschaltung nach dem Tromboning-Verfahren durchgeführt. Ergibt sich aus den weitergegebenen Rufnummern der direkte Verbindungsweg, so wird die Durchschaltung nach dem Anti-Tromboning-Verfahren durchgeführt. Die in der Ermittlungseinrichtung 2 zur Ermittlung von Verbindungsgebühren implementierte Software schaltet somit die kostengünstigere Verbindung durch. Zusätzlich kann der erste Teilnehmer (zum Beispiel Kunde) vor Durchschaltung des Verbindungsweges eine Ansage halten.

Erfindungsgemäß kann somit durch eine sehr einfache Software im Vergleichsverfahren der zur Zeit günstigere Verbindungsweg ermittelt und durchgeschaltet werden.

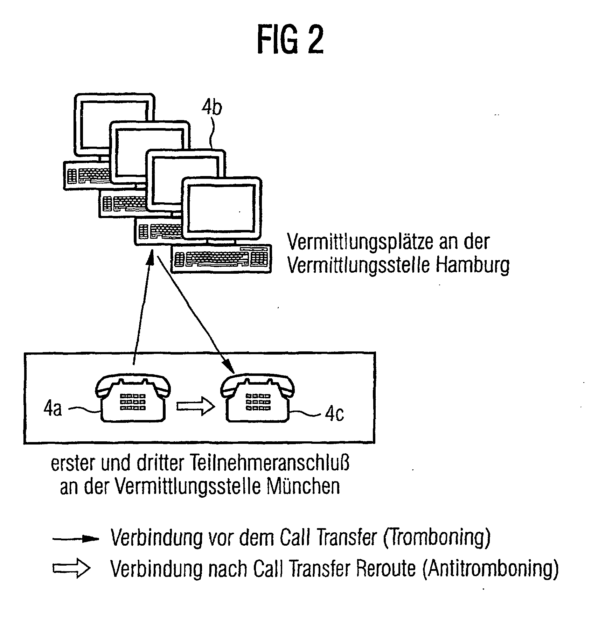

Anhand der Figuren 2 bis 7 wird nachfolgend das erfindungsgemäße Verfahren zur Umwandlung einer Dreierfernmeldeverbindung in eine Zweierfernmeldeverbindung näher erläutert. Die Vermittlungsstellen 3a ... 3c sind in diesen Figuren nicht mehr eingezeichnet, es versteht sich jedoch von selbst, daß die Teilnehmeranschlüsse über Vermittlungsstellen mit dem Fernsprechnetz verbunden sind. Die Erläuterungen erfolgen hierbei anhand des in der Einleitung beschriebenen "Bank-Szenarios".

Die Telefonzentrale (Call Center) der Bank (Vermittlungsplatz, zweiter Teilnehmeranschluß 4b) ist in diesem Beispiel in Hamburg, der Kunde (erster Teilnehmeranschluß 4a) befindet sich beispielsweise in München. Die Vermittlungskraft stellt anhand eines kurzen Gespräches fest, daß ein bestimmter Sachbearbeiter (dritter Teilnehmeranschluß 4c) zuständig ist, der sich in diesem Beispiel ebenfalls in München befindet.

In diesem Beispiel ist im Normalfall die direkte Durchschaltung die günstigere Verbindung, da sich sowohl Kunde als auch Sachbearbeiter in derselben Stadt (an der gleichen Vermittlungsstelle) befinden. In diesem Beispiel erfolgt eine Signalisierung der Gebühreninformationen des Verbindungsweges vom ersten zum zweiten Teilnehmeranschluß, und eine Rücksignalisierung, daß der direkte Verbindungsweg schaltbereit ist.

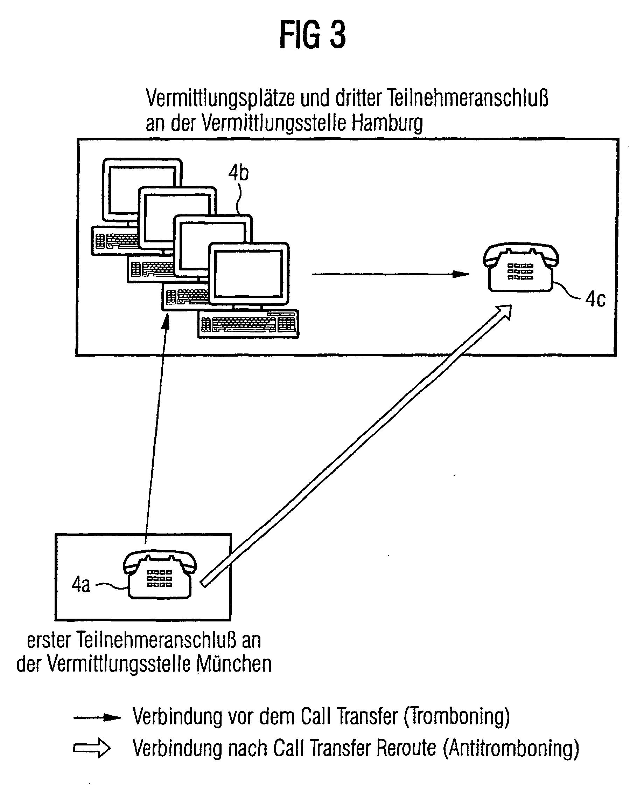

Auch im Beispiel von Figur 3 ist die direkte Verbindung zwischen dem ersten Teilnehmeranschluß 4a und dem dritten Teilnehmeranschluß 4c die kostengünstigere. Ohne Anti-Tromboning wird der Verbindungsweg zwischen dem ersten und dem zweiten Teilnehmeranschluß als Fernverbindung plus der Verbindungsweg zwischen zweitem und drittem Teilnehmeranschluß als Ortsverbindung vergebührt und führt zu leicht höheren Kosten als die direkte Durchschaltung.

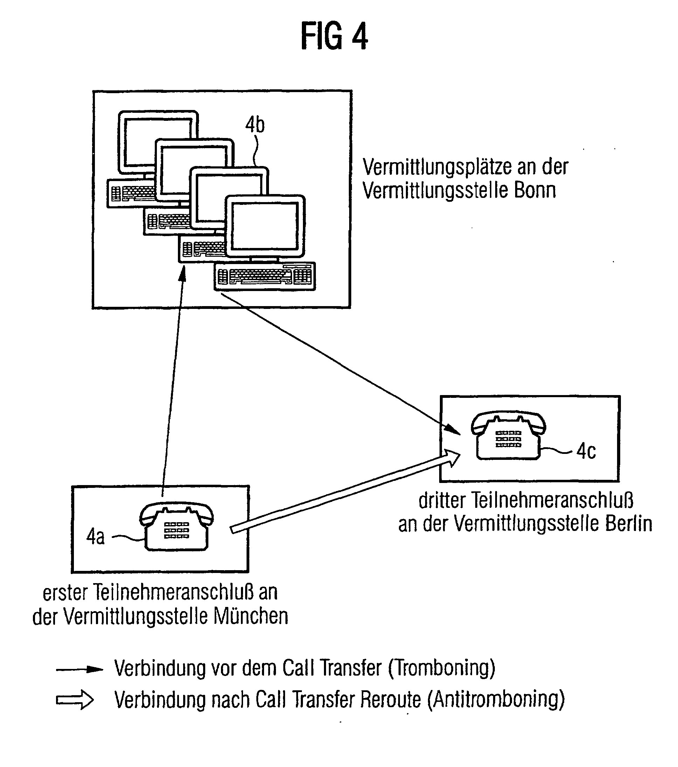

In Fig. 4 befindet sich der Sachbearbeiter zentral in Berlin. In diesem Beispiel hängt es von den aktuellen Zonen ab, welche Verbindung die günstigere ist. So könnten z. B. die Verbindungswege zwischen dem ersten und dem zweiten Teilnehmeranschluß und dem zweiten und dem dritten Teilnehmeranschluß Nahbereichszonen sein, die in der Summe billigere Gesprächsgebühren verursachen als die direkte Verbindung vom ersten zum dritten Teinehmeranschluß, die ein Ferngespräch darstellt. Durch Signalisierung der Verzonungsergebnisse und Bewertung im Vermittlungsplatz 4b kann dieser Fall hier erkannt werden und die kostengünstigere Durchschaltung über die Tromboninglösung (erster und zweiter Teilnehmeranschluß und dritter und vierter Teilnehmeranschluß) erfolgen.

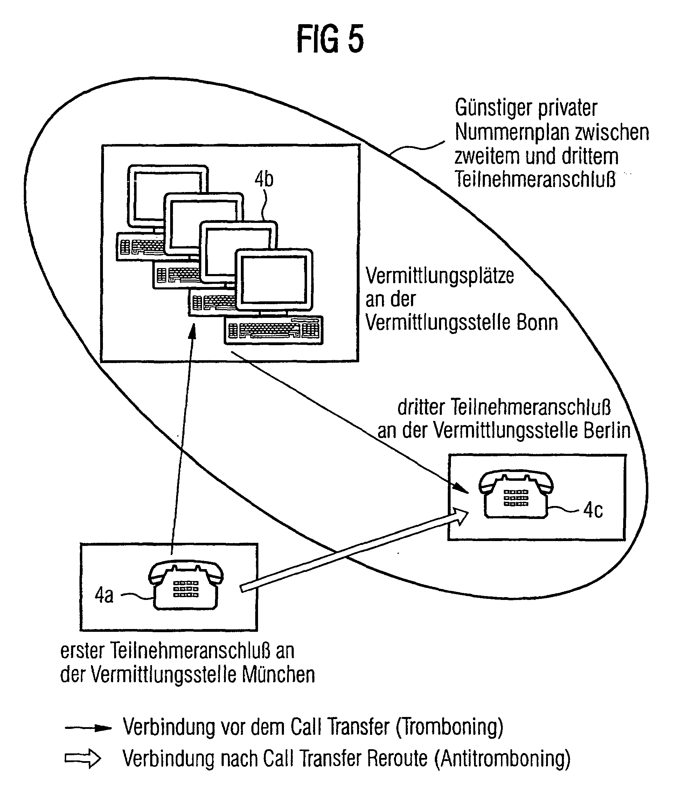

In den Figuren 5, 6 und 7 ist die gleiche Situation dargestellt. Die Unterschiede in der Vergebührung ergeben sich hier jedoch aus einer unterschiedlichen Nutzung von privaten Rufnummernplänen (wie z. B. innerhalb einer CENTREX-Lösung), wobei einzelne Teilstrecken kostengünstiger vergebührt werden, als dies in einer öffentlichen Verbindung geschehen würde. Insbesondere in diesen Beispielen zeigt sich der klare Vorteil der gebührenabhängigen Anti-Trombonig-Lösung.

Im Beispiel von Fig. 5 existiert hierbei ein günstiger privater Rufnummernplan zwischen dem zweiten und dem dritten Teilnehmeranschluß. Hier kann es sein, daß aufgrund einer günstigeren Verbindung zwischen den Kunden in München und dem Vermittlungsplatz in Bonn die Verbindung nach dem Tromboning-Verfahren durchgeschaltet wird, da zwischen dem Vermittlungsplatz und dem Sachbearbeiter ein günstiger privater Nummernplan besteht.

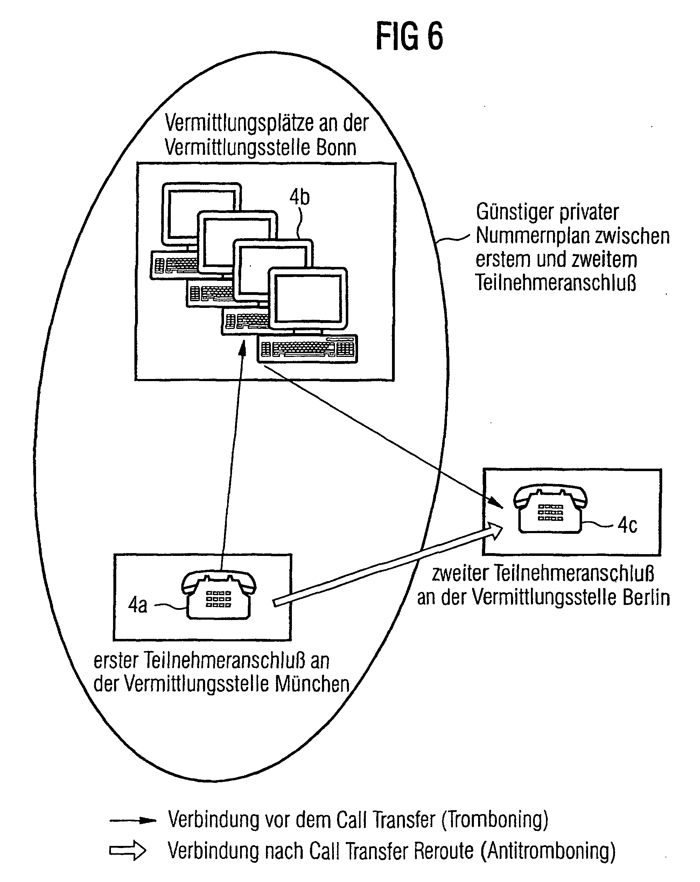

In der Fig. 6 besteht ein privater Nummernplan zwischen dem ersten und dem zweiten Teilnehmeranschluß. Dies ist z. B. in einer Firma der Fall, wenn der erste Teilnehmer (Mitarbeiter) über die Vermittlungszentrale (zweiter Teilnehmeranschluß) einen externen Teilnehmeranschluß (dritter Teilnehmeranschluß) erreichen will.

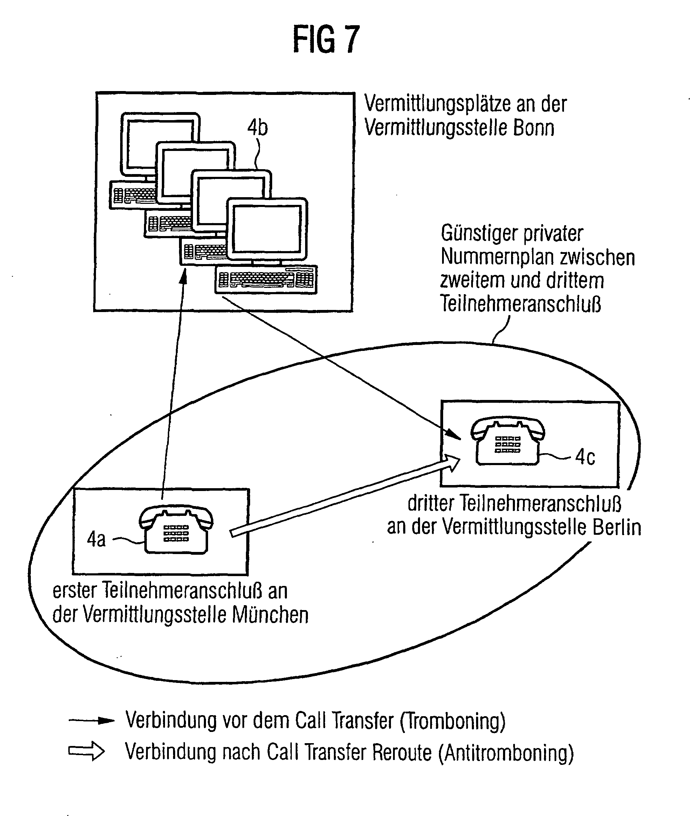

In Fig. 7 besteht ein privater Nummernplan zwischen dem ersten Teilnehmeranschluß und dem dritten Teilnehmeranschluß. Hier wird in der Regel der direkte Verbindungsweg die günstigere Verbindung darstellen, wenn es sich bei dem Verbindungsweg über den zweiten Teilnehmeranschluß um Fernverbindungen handelt.

## Patentansprüche

1. Vorrichtung (1) zum Umwandeln einer über ein Fernsprechnetz vermittelten Dreierfernmeldeverbindung zwischen einem ersten (4a), einem zweiten (4b) und einem dritten (4c) Teilnehmeranschluß, wobei die Teilnehmeranschlüsse (4a, 4b, 4c) über Vermittlungsstellen (3a, 3b, 3c) mit dem Fernsprechnetz verbunden sind und die Dreierfernmeldeverbindung über die Vermittlungsstelle (3b) führt, an die der zweite Teilnehmeranschluß (4b) angeschlossen ist, in eine Zweierfernmeldeverbindung zwischen dem ersten (4a) und dem dritten (4c) Teilnehmeranschluß, wobei die Zweierfernmeldeverbindung entweder über die Vermittlungsstelle (3b) , an der der zweite Teilnehmeranschluß (4b) angeschlossen ist, oder direkt vom ersten (3a) zum dritten (3c) Teilnehmeranschluß führt,
**gekennzeichnet durch**
Ermittlungseinrichtung (2) zum Ermitteln von Verbindungsgebühren, die die Gebühren der Verbindung über die Vermittlungsstelle (3b) des zweiten (4b) Teilnehmeranschlusses und die Gebühren der direkten Verbindung ermitteln und die Durchschaltung der Zweierfernmeldeverbindung über diejenige Verbindung anregt, über die geringere Gebühren anfallen.

2. Vorrichtung (1) gemäß Anspruch 1,
**dadurch gekennzeichnet,**
**daß** die Ermittlungseinrichtung (2) zum Ermitteln von Verbindungsgebühren die Durchschaltung der Zweierfernmeldeverbindung anregt, indem sie entsprechende Signalisierungsbefehle über einen Signalisierungskanal an die betroffenen Vermittlungsstellen versendet.

3. Vorrichtung (1) gemäß Anspruch 1 oder 2,
**dadurch gekennzeichnet,**
**daß** der erste (4a) und der dritte (4c) Teilnehmeranschluß an eine gemeinsame Vermittlungsstelle angeschlossen sind.

4. Vorrichtung (1) gemäß Anspruch 1, 2 oder 3,
**dadurch gekennzeichnet,**
**daß** die Ermittlungseinrichtung (2) zum Ermitteln von Verbindungsgebühren Tariftabellen aus der Vermittlungsstelle (3a) des ersten Teilnehmeranschlusses (4a) ausliest und aufgrund der Tariftabellen die Gebühren für die jeweilige Verbindung berechnet.

5. Vorrichtung (1) gemäß Anspruch 1, 2 oder 3,
**dadurch gekennzeichnet,**
**daß** die Ermittlungseinrichtung (2) zum Ermitteln von Verbindungsgebühren Zonendaten aus der Vermittlungsstelle (3a) des ersten Teilnehmers ausliest.

6. Vorrichtung (1) gemäß Anspruch 5,
**dadurch gekennzeichnet,**
**daß** die Ermittlungseinrichtung (2) zum Ermitteln von Verbindungsgebühren Tarifdaten über einen Internet-Zugang ausliest und durch Verknüpfung mit den Zonendaten die Gebühren berechnet.

7. Verfahren zum Umwandeln einer über ein Fernsprechnetz vermittelten Dreierfernmeldeverbindung zwischen einem ersten (4a), einem zweiten (4b) und einem dritten (4c) Teilnehmeranschluß, wobei die Teilnehmeranschlüsse über Vermittlungsstellen (3a, 3b, 3c) mit dem Fernsprechnetz verbunden sind und die Dreierfernmeldverbindung über die Vermittlungsstelle (3b) führt, an die der zweite Teilnehmeranschluß (4b) angeschlossen ist, in eine Zweierfernmeldeverbindung zwischen dem ersten (4a) und dem dritten (4c) Teilnehmeranschluß, wobei die Zweierfernmeldeverbindung entweder über die Vermittlungsstelle (3b), an der der zweite Teilnehmeranschluß (4b) angeschlossen ist oder direkt vom ersten (4a) zum dritten (4c) Teilnehmeranschluß führt,
**dadurch gekennzeichnet,**
**daß** Gebühren der Verbindung über die Vermittlungsstelle (3b) des zweiten Teilnehmeranschlusses (4b) und die Gebühren der direkten Verbindung ermittelt werden und
die Durchschaltung der Zweierfernmeldeverbindung über diejenige Verbindung angeregt wird, über die geringere Gebühren anfallen.

8. Verfahren gemäß Anspruch 7,
**dadurch gekennzeichnet,**
**daß** die Durchschaltung der Zweierfernmeldeverbindung angeregt wird, indem entsprechende Signalisierungsbefehle über einen Signalisierungskanal an die Vermittlungsstellen versendet werden.

9. Verfahren gemäß Anspruch 7 oder 8,
**dadurch gekennzeichnet,**
**daß** der erste (4a) und der dritte (4c) Teilnehmeranschluß an eine gemeinsame Vermittlungsstelle angeschlossen sind.

10. Verfahren gemäß Anspruch 7, 8 oder 9,
**dadurch gekennzeichnet,**
**daß** Tariftabellen aus der Vermittlungsstelle, an die der erste Teilnehmeranschluß (4a) angeschlossen ist, ausgelesen und aufgrund der Tariftabellen die Gebühren für die jeweilige Verbindung berechnet werden.

11. Verfahren gemäß Anspruch 7, 8 oder 9,
**dadurch gekennzeichnet,**
**daß** Zonendaten aus der Vermittlungsstelle (4a) des ersten Teilnehmers ausgelesen werden.

12. Verfahren gemäß Anspruch 11,
**dadurch gekennzeichnet,**
**daß** Tarifdaten über einen Internet-Zugang ausgelesen und durch Verknüpfung mit den Zonendaten die Gebühren berechnet werden.

## Claims

1. Device (1) for converting a three-way telecommunications connection switched via a telephone network between a first (4a), a second (4b) and a third (4c) subscriber line, wherein the subscriber lines (4a, 4b, 4c) are connected via switching centres (3a, 3b, 3c) to the telephone network and the three-way telecommunications connection is routed over the switching centre (3b) to which the second subscriber line (4b) is connected, into a two-way telecommunications connection between the first (4a) and third (4c) subscriber line, wherein the two-way telecommunications connection is routed either via the switching centre (3b) to which the second subscriber line (4b) is connected or directly from the first (3a) to the third (3c) subscriber line
**characterised by**
an ascertaining device (2) for ascertaining connection charges which ascertains the charges for the connection via the switching centre (3b) of the second (4b) subscriber line and the charges for the direct connection and initialises transfer of the two-way telecommunications connection via the connection via which lower charges arise.

2. Device (1) according to Claim 1
**characterised in that**
the ascertaining device (2) for ascertaining connection charges initialises transfer of the two-way telecommunications connection by sending relevant signalling instructions to the switching centres concerned over a signalling channel.

3. Device (1) according to Claim 1 or 2
**characterised in that**
the first (4a) and third (4c) subscriber line are connected to a common switching centre.

4. Device (1) according to Claim 1, 2 or 3
**characterised in that**
the ascertaining device (2) for ascertaining connection charges reads out charge-rate tables from the switching centre 3a) of the first subscriber line (4a) and calculates the charges for the respective connection based on said charge-rate tables.

5. Device (1) according to Claim 1, 2 or 3
**characterised in that**
the ascertaining device (2) for ascertaining connection charges reads out zone data from the switching centre (3a) of the first subscriber.

6. Device (1) according to Claim 5
**characterised in that**
the ascertaining device (2) for ascertaining connection charges reads out charge-rate data via an internet access and calculates the charges through linking with the zone data.

7. Method for converting a three-way telecommunications connection switched via a telephone network between a first (4a), a second (4b) and a third (4c) subscriber line, wherein the subscriber lines are connected via switching centres (3a, 3b, 3c) to the telephone network and the three-way telecommunications connection is routed over the switching centre (3b) to which the second subscriber line (4b) is connected, into a two-way telecommunications connection between the first (4a) and third (4c) subscriber line, wherein the two-way telecommunications connection is routed either via the switching centre (3b) to which the second subscriber line (4b) is connected or directly from the first (4a) to the third (4c) subscriber line
**characterised in that**
the charges for the connection via the switching centre (3b) of the second subscriber line (4b) and the charges for the direct connection are ascertained and
the transfer of the two-way telecommunications connection is initialised via the connection via which lower charges arise.

8. Method according to Claim 7
**characterised in that**
transfer of the two-way telecommunications connection is initialised by sending relevant signalling instructions to the switching centres over a signalling channel.

9. Method according to Claim 7 or 8
**characterised in that**
the first (4a) and third (4c) subscriber line are connected to a common switching centre.

10. Method according to Claim 7, 8 or 9
**characterised in that**
charge-rate tables are read out from the switching centre to which the first subscriber line (4a) is connected and the charges for the respective connection are calculated based on said charge-rate tables.

11. Method according to Claim 7, 8 or 9
**characterised in that**
zone data is read out from the switching centre (4a) of the first subscriber.

12. Method according to Claim 11
**characterised in that**
charge-rate data is read out via an internet access and the charges are calculated through linking with the zone data.

## Revendications

1. Dispositif (1) permettant de convertir une communication téléphonique entre trois participants, commutée à travers un réseau téléphonique entre un premier (4a), un deuxième (4b) et un troisième (4c) raccordement d'abonné, les raccordements d'abonnés (4a, 4b, 4c) étant reliés au réseau téléphonique par l'intermédiaire de centraux de commutation (3a, 3b, 3c) et la communication téléphonique entre trois participants passant par le central de commutation (3b), sur lequel est connecté le deuxième raccordement d'abonné (4b), en une communication téléphonique entre deux participants entre le premier (4a) et le troisième (4c) raccordement d'abonné, la communication téléphonique entre deux participants passant ou bien par le central de commutation (3b), sur lequel est connecté le deuxième raccordement d'abonné (4b), ou bien directement entre le premier (3a) et le troisième (3c) raccordement d'abonné
**caractérisé par**
un dispositif de détection (2) permettant de déterminer les redevances de la liaison par l'intermédiaire du central de commutation (3b) du deuxième raccordement d'abonné (4b) et les redevances de la liaison directe et qui provoque la commutation de la communication téléphonique entre deux participants à travers la liaison qui entraîne les redevances les plus faibles.

2. Dispositif (1 ) selon la revendication 1
**caractérisé par le fait**
**que** le dispositif de détection (2) permettant de déterminer les redevances des liaisons provoque la commutation de la communication téléphonique entre deux participants en envoyant, à travers un canal de signalisation, des instructions correspondantes de signalisation aux centraux de commutation concernés.

3. Dispositif (1) selon la revendication 1 ou 2
**caractérisé par le fait**
**que** le premier (4a) et le troisième (4c) raccordement d'abonné sont connectés sur un central de commutation commun.

4. Dispositif (1 ) selon la revendication 1, 2 ou 3
**caractérisé par le fait**
**que** le dispositif de détection (2) permettant de déterminer les redevances des liaisons interroge des tableaux de tarification dans le central de commutation (3a) du premier raccordement d'abonné (4a) et, sur la base des tableaux de tarification, calcule les redevances relatives à la liaison respective.

5. Dispositif (1) selon la revendication 1, 2 ou 3
**caractérisé par le fait**
**que** le dispositif de détection (2) permettant de déterminer les redevances des liaisons interroge des données de zonage dans le central de commutation (3a) du premier abonné.

6. Dispositif (1) selon la revendication 5
**caractérisé par le fait**
**que** le dispositif de détection (2) permettant de déterminer les redevances relatives aux liaisons interroge des données de tarification par l'intermédiaire d'un accès à l'Internet et calcule les redevances en les combinant avec les données de zonage.

7. Procédé permettant de convertir une communication téléphonique entre trois participants commutée à travers un réseau téléphonique entre un premier (4a), un deuxième (4b) et un troisième (4c) raccordement d'abonné, les raccordements d'abonnés étant reliés au réseau téléphonique par l'intermédiaire de centraux de commutation (3a, 3b, 3c) et la communication téléphonique entre trois participants passant par le central de commutation (3b), sur lequel est connecté le deuxième raccordement d'abonné (4b), en une communication téléphonique entre deux participants entre le premier (4a) et le troisième (4c) raccordement d'abonné, la communication téléphonique entre deux participants passant ou bien par le central de commutation (3b), sur lequel est connecté le deuxième raccordement d'abonné (4b), ou bien directement entre le premier (3a) et le troisième (3c) raccordement d'abonné
**caractérisé par le fait**
**qu'**on détermine les redevances relatives à la liaison par l'intermédiaire du central de commutation (3b) du deuxième raccordement d'abonné (4b) et les redevances relatives à la liaison directe et
**qu'**on provoque la commutation de la communication téléphonique entre deux participants à travers la liaison qui entraîne les redevances les plus faibles.

8. Procédé selon la revendication 7
**caractérisé par le fait**
**que** la commutation de la communication téléphonique entre deux participants est provoquée en envoyant, à travers un canal de signalisation, des instructions de signalisation adéquates aux centraux de commutation.

9. Procédé selon la revendication 7 ou 8
**caractérisé par le fait**
**que** le premier (4a) et le troisième (4c) raccordement d'abonné sont connectés sur un central de commutation commun.

10. Procédé selon la revendication 7, 8 ou 9
**caractérisé par le fait**
**que** des tableaux de tarification sont lus dans le central de commutation sur lequel le premier raccordement d'abonné (4a) est raccordé et que les redevances pour la liaison respective sont calculées sur la base des tableaux de tarification.

11. Procédé selon la revendication 7, 8 ou 9
**caractérisé par le fait**
**que** des données de zonage sont lues dans le central de commutation (4a) du premier abonné.

12. Procédé selon la revendication 11
**caractérisé par le fait**
**que** des données de tarification sont lues par l'intermédiaire d'un accès à l'Internet et que les redevances sont calculées en les combinant avec les données de zonage.
